# EUROPÄISCHE PATENTSCHRIFT

(11) **EP 1 970 292 B1**
(45) Veröffentlichungstag und Bekanntmachung des Hinweises auf die Patenterteilung: **21.11.2012**
(21) Anmeldenummer: 07122736.7
(22) Anmeldetag: 10.12.2007
(51) Int. Cl.: B62D 33/06

(54) **Landwirtschaftliches Fahrzeug mit beweglicher Fahrerkabine**
Agricultural vehicle with mobile driver's cab
Véhicule agricole doté d'une cabine mobile

(30) Priorität: 07.03.2007 DE 102007011367
(43) Veröffentlichungstag der Anmeldung: 17.09.2008
(73) Patentinhaber: CLAAS Selbstfahrende Erntemaschinen GmbH, 33428 Harsewinkel (DE)
(72) Erfinder: Kleffmann, Bernd, 33428, Harsewinkel (DE); Scholz, Egbert, 33729, Bielefeld (DE); Oldenburg, Joachim, 47589, Uedem (DE); Benten, Dieter, 48336, Sassenberg (DE)

(56) Entgegenhaltungen:
- EP-A- 0 177 029
- WO-A-81/00541
- DE-A1- 2 154 364
- DE-A1- 3 000 696
- US-A1- 2007 131 470

## Beschreibung

Die vorliegende Erfindung betrifft ein landwirtschaftliches Arbeitsfahrzeug mit einer in Bezug zum Fahrgestell beweglichen Fahrerkabine. Fahrzeuge dieser Art ermöglichen es dem Fahrgestell, Unebenheiten des Untergrundes genau zu folgen und so jederzeit eine stabile Lage aufrecht zu erhalten, gleichzeitig aber den Fahrer vor beim Überfahren von Unebenheiten auftretenden abrupten Stößen abzuschirmen. Derartige Fahrzeuge werden daher insbesondere zum Befahren von Ackerflächen eingesetzt, zum Beispiel als Erntemaschine, wie in DE 200 07 995 U1 beschrieben, oder als Ackerschlepper, wie in DE 40 38 772 A1 beschrieben.

Bei diesen bekannten Fahrzeugen sind Aufhängungspunkte, die die Fahrerkabine mit dem Fahrgestell verbinden, jeweils unter der Fahrerkabine angeordnet. Beim Überfahren von Unebenheiten können zwar aufgrund der vertikalen Beweglichkeit wenigstens bestimmter Aufhängungspunkte vertikale Stöße abgefangen werden, doch können heftige Wank- und Nickbewegungen der Fahrerkabine angeregt werden, die vom Fahrer häufig als unangenehm wahrgenommen werden.

Aus der WO81/00541 ist eine Kabine für ein landwirtschaftliches Fahrzeug bekannt, welches durch vier Aufhängungspunkte mit dem Fahrgestell verbunden rist wobei sich zwei Aufhängungspunkte unterhalb der Kabine und zwei weitere Aufhängungspunkte an der Kabinenrückwand befinden. Die Aufhängungspunkte an der Kabinenrückwand nehmen Kräfte nur in horizontaler Richtung auf.

Die US 2007/0131470 beschreibt eine von einem Fahrzeugrahmen getragene Kabine, die über vier vibrationsisolierenden vorrichtungen an dem Fahrzeugrahmen angeordnet ist, Die Vorrichtungen sind derart zueinander angeordnet, dass sie eine Ebene beschreiben, die durch den Schwerpunkt der Kabine verläuft. Die Anordnung der vibrationsisolierenden Vorrichtungen ist entweder vollständig unterhalb der Kabine oder teilweise auf dem Dach dar Kabine vorgesehen, wobei die Vorrichtungen nur zur Aufnahme von Kräften senkrecht oder quer zur Kabinenlängsachse eingerichtet sind.

Ziel der vorliegenden Erfindung ist, ein landwirtschaftliches Arbeitsfahrzeug mit beweglicher Fah rerkabine anzugeben, bei dem Wank- und Nickbewegungen wirksam unterdrückt werden. Auch soll die Materialbelastung in den Streben klein gehalten werden. Die Aufgahe wind durch ein landwirtschaftliches Arbeitsfahrzeug gemäss Anspruch 1 gelöst.

Durch eine solche Platzierung kommt die durch die Aufhängungspunkte verlaufende Ebene dem Schwerpunkt der Fahrerkabine wesentlich näher als im Falle der herkömmlichen Aufhängung unterhalb der Fahrerkabine. Trägheitskräfte der Fahrerkabine, die bei Kippbewegungen den Fahrgestells, wenn dieses Unebenheiten überfährt, wirksam werden, haben daher einen verkürzten Hebelarm und können daher Nick- oder Wankbewegungen der Fahrerkabine nicht mehr effizient anregen.

Generell ist die Unterdrückung der Nick- und Wankbewegungen umso effektiver, je kleiner der Abstand zwischen dem Schwerpunkt der Kabine und der die Aufhängungspunkte verbindenden Ebene ist. Allgemein sollte der Abstand zwischen dem Schwerpunkt und der Ebene kleiner als ein Viertel der Höhe der Fahrerkabine sein, wobei noch kleinere Abstände, etwa von weniger als einem Sechstel oder einem Achtel der Höhe, bevorzugt sind.

Um den Einfluss unvermeidlicher Bewegungen der Kabine auf das Wohlbefinden des Fahrers zu minimieren, ist die Ebene vorzugsweise durch einen Sitz des Fahrers in der Fahrerkabine bzw. den Körper des Fahrers selbst gelegt.

Vorteilhafterweise ist wenigstens ein erster der Aufhängungspunkte an einer Rückwand der Fahrerkabine angeordnet. So beeinträchtigt der Aufhängungspunkt weder die Sicht aus der Fahrerkabine noch die Ein- und Ausstiegsmöglichkeiten.

Um den Abstand zwischen dem Schwerpunkt der Fahrerkabine und der von den Aufhängungspunkten definierten Ebene zu minimieren, ist der wenigstens eine erste Aufhängungspunkt zweckmäßigerweise auf einer der Fahrerkabine oder höher angeordnet; unter statischen Gesichtspunkten ist auch eine Platzierung des ersten Aufhängungspunkts an einer oberen hinteren Kante der Fahrerkabine sinnvoll.

Die Gesamtzahl der Aufhängungspunkte kann insbesondere genau drei oder vier betragen.

Die Anordnung der Aufhängungspunkte ist vorzugsweise bezüglich einer Längsmittenebene der Fahrerkabine symmetrisch.

Wenigstens ein zweiter der Aufhängungspunkte kann dann zweckmäßigerweise an einer unteren vorderen Kante der Fahrerkabine angeordnet sein.

Insbesondere kann die Fahrerkabine um eine durch den zweiten Aufhängungspunkt oder zwei zweite Aufhängungspunkte verlaufende Achse schwenkbeweglich sein.

Wenigstens einer der Aufhängungspunkte kann durch einen elastischen Formkörper gebildet sein, der zwischen zwei quer zur Wirkrichtung einer die Fahrerkabine an dem Aufhängungspunkt unterstützenden Kraft orientierten, fahrgestellfesten Anschlagflächen gehalten ist und eine Schulter aufweist, auf der die Fahrerkabine ruht. Um den Aufbau der Kabinenaufhängung zu vereinfachen, sind vorzugsweise alle Aufhängungspunkte durch identische Formkörper gebildet.

Um Auslenkungen quer zur Wirkrichtung der die Fahrerkabine unterstützenden Kraft puffern zu können, weist der Formkörper vorzugsweise in Höhe der Schulter einen Hohlraum auf.

Die Anschlagflächen sind vorteilhafterweise durch einen sich durch den Formkörper, insbesondere durch dessen Hohlraum, erstreckenden Stift fest verbunden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Mähdreschers als Beispiel für ein erfindungsgemä-βes Fahrzeug;
- Fig. 2: eine vergrößerte Seitenansicht eines Aufhängungspunktes der Fahrerkabine des Mähdreschers; und
- Fig. 3: einen Schnitt durch einen Aufhängungspunkt der Fahrerkabine.

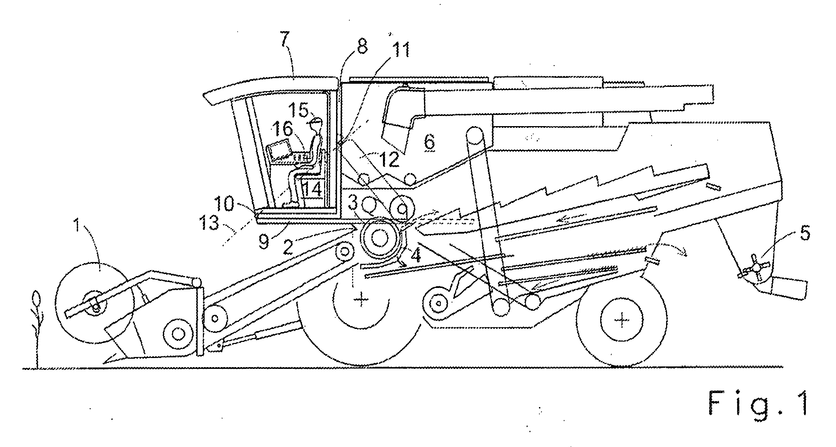

Der in Fig. 1 schematisch dargestellte Mähdrescher umfasst in an sich bekannter Weise ein Schneidwerk 1 zum Schneiden und Aufnehmen von Erntegut, eine Drescheinrichtung 2 mit einer um eine quer zur Fahrtrichtung orientierte Achse drehbaren Dreschtrommel 3 und einen zugeordneten Dreschkorb 4, sowie diverse Reinigungsstufen zum Auftrennen der die Drescheinrichtung 2 verlassenden Materialströme in im Wesentlichen kornfreies Stroh, das über einen Häcksler 5 am rückwärtigen Ende des Mähdreschers ausgeworfen wird, und Korn, das in einem Korntank 6 aufgefangen wird. Aufbau und Funktionsweise der einzelnen Reinigungsstufen werden, da an sich bekannt und mit der vorliegenden Erfindung in keinem direkten Zusammenhang stehend, hier nicht genauer beschrieben.

Vor dem Korntank 6 und von diesem durch einen vertikalen Luftspalt 8 getrennt ist eine Fahrerkabine 7 angeordnet. Das Gewicht der Fahrerkabine ruht im Wesentlichen auf zwei mit dem Fahrgestell des Mähdreschers fest verbundenen Längsträgern 9, die sich entlang einer linken und rechten Unterkante der Fahrerkabine 7 erstrecken und mit dieser an zwei Aufhängungspunkten 10 an vorderen unteren Ecken der Fahrerkabine 7 verbunden sind. Die Aufhängungspunkte 10 sind bei Erschütterungen in jeder Raumrichtung um einige Millimeter nachgiebig und erlauben in begrenztem Umfang eine Nickbewegung der Fahrerkabine 7 um eine durch die Aufhängungspunkte 10 quer zur Ebene der Zeichnung verlaufende Achse.

Die Nickbewegungsfreiheit der Fahrerkabine 7 ist eingeschränkt durch zwei weitere Aufhängungspunkte 11, die jeweils etwa in halber Höhe der Rückwand (d.h. auf einer Quermittelebene) der Fahrerkabine 7 an deren rechtem und linkem Rand angeordnet sind und die Fahrerkabine 7 mit zwei Diagonalstreben 12 verbinden. Von den Aufhängungspunkten 11 abgewandte Enden der Diagonalstreben 12 sind in Fig. 1 mit den Längsträgern 9 verbunden dargestellt; selbstverständlich können sie in beliebiger anderer Weise am Fahrgestell befestigt sein.

Die vier bezüglich einer Längsndttelebene der Fahrerkabine 7 symmetrisch angeordneten Aufhängungspunkte 10, 11 definieren eine imaginäre schiefe E-beine 13, die sich durch die Fahrerkabine 7 und einen darin befindlichen Fahrersitz 14 bzw. den Körper des Fahrers 15 selbst erstreckt. Der Schwerpunkt 16 der Kabine 7 liegt unweit der Ebene 13; im hier dargestellten Fall beträgt die Entfernung ca. 1/10 der Kabinenhöhe. Trägheitskräfte, die bei Erschütterungen des Fahrgestells auf die Fahrerkabine 7 wirken, entfalten daher in Bezug auf die Ebene 13 nur ein kleines Drehmoment, so dass keine starken Wank- oder Nickbewegungen der Kabine 7 angeregt werden können.

Einer nicht gezeichneten Abwandlung zufolge könnte die Zahl der Aufhängungspunkte auch auf drei reduziert sein, z.B. einen einzigen auf der Längsmitan der Kabinenrückwand angeordneten und die zwei oben beschriebenen unteren vorderen Aufhänfungspunkte 10, oder einen einzigen unteren vorderen Aufhängungspunkt auf der Längsmittelebene in Kombination mit den zwei oben beschriebenen Aufhängungspunkten 11.

Die Diagonalstreben 12 erstrecken sich in etwa rechtwinklig zu der schiefen Ebene 13, so dass die Diagonalstreben 12 praktisch ausschließlich auf Druck in ihrer Längsrichtung belastet sind.

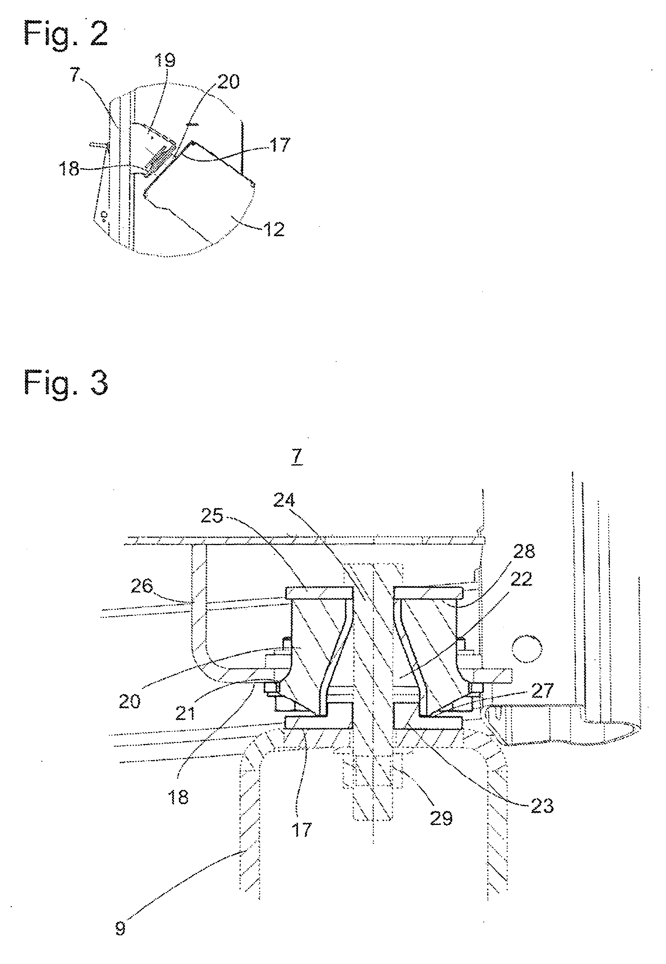

Fig. 2 zeigt eine Seitenansicht eines Aufhängungspunktes 10. Zwischen einander zugewandten, zu der schiefen Ebene 13 parallelen Stirnflächen 17, 18 der Diagonalstrebe 12 bzw. eines von der Rückwand der Fahrerkabine 7 abstehenden Bocks 19 ist ein elastischer Formkörper 20, z.B. aus Gummi, gefangen.

Die Aufhängungspunkte 11 unterscheiden sich von den Aufhängungspunkten 10 im Wesentlichen nur durch die räumliche Orientierung ihres Formkörpers 20. Sie ist in beiden Fällen so festgelegt, dass eine Längsachse des Formkörpers in Richtung der von dem Aufhängungspunkt aufgenommenen Kraft erstreckt und die einander zugewandten, parallelen Stirnflächen - im Falle der Aufhängungspunkte 10 die eines Längsträgers 9 bzw. eines Bocks an der Unterseite der Kabine - auf dieser Kraft senkrecht stehen.

Die Gestalt des Formkörpers 20 ist in Fig. 3 anhand eines Schnittes durch einen der Aufhängungspunkte 10 dargestellt.

Der Formkörper 20 hat eine im Wesentlichen zylindrische Gestalt mit einer an der Umfangsfläche umlaufenden Schulter 21 und einen zentralen Hohlraum 22. Der Hohlraum 22 ist zu seiner von der Fahrerkabine 7 abgewandten Seite hin kegelförmig aufgeweitet. Eine auf der Stirnfläche der Diagonalstrebe 12 oder, wie in Fig. 3 gezeigt, dem Längsträger 9 abgestützte untere Deckscheibe 23 greift formschlüssig in das aufgeweitete Ende des Hohlraums 22 ein. Ein Stift 24 erstreckt sich durch eine Bohrung des Längsträgers 9, die Deckscheibe 23, den Hohlraum 22 und eine starre Druckplatte 25 und hält den Formkörper 20 zwischen dem Längsträger 9 und der Druckplatte 25, genauer gesagt zwischen einander zugewandten Anschlagflächen 27, 28 der Deckscheibe 23 und der Druckplatte 25, vorgespannt. Der Stift 24 ist hier als Schraube ausgeführt, die in eine Mutter 29 an einer Innenfläche des im Quer schnitt U-förmigen Längsträgers eingreift. So ist durch Drehen der Schraube oder der Mutter 29 der Abstand zwischen den Anschlagflächen 27, 28 bzw. die Vorspannung des Formkörpers 20 einstellbar.

Ein von der Fahrerkabine 7 nach unten abstehender Bock 26 hat an seiner dem Längsträger 9 zugewandten Stirnfläche eine Öffnung, in die die Druckplatte 25 und der obere Bereich des Formkörpers 20 eingreifen. Der Bock 26 ruht auf der umlaufenden Schulter 21 des Formkörpers 20 und ist an dieser in axialer Richtung des Formkörpers bzw. in vertikaler Richtung formschlüssig verankert. Die Schulter 21 ist in vertikaler Richtung nachgiebig und ermöglicht so ein Federn der Kabine in vertikaler Richtung; das Vorhandensein des in Höhe der Schulter 21 von dem Stift 24 nicht ausgefüllten Hohlraumes 22 ermöglicht, darüber hinaus eine Relativbewegung von Bock 26 und Längsträger 9 auch in horizontaler Richtung

### Bezugszeichen

Schneidwerk 1
Drescheinrichtung 2
Dreschtrommel 3
Dreschkorb 4
Häcksler 5
Korntank 6
Fahrerkabine 7
Luftspalt 8
Längsträger 9
Aufhängungspunkte 10, 11
Diagonalstrebe 12
Ebene 13
Fahrersitz 14
Fahrer 15
Schwerpunkt 16
Stirnflächen 17, 18
Bock 19
Formkörper 20
Schulter 21
Hohlraum 22
Deckscheibe 23
Stift 24
Druckplatte 25
Bock 26
Anschlagflächen 27, 28
Mutter 29

## Patentansprüche

1. Landwirtschaftliches Arbeitsfahrzeug mit einem Fahrgestell und einer an wenigstens drei Aufhängungspunkten (10, 11) mit dem Fahrgestell verbundenen Fahrerkabine (7), wobei die Aufhängungspunkte (10, 11) eine Ebene (13) definieren, die das Innere der Fahrerkabine (7) schneidet, **dadurch gekennzeichnet, dass** die Fahrerkabine (7) um eine durch den zweiten Aufhängungspunkt (10) verlaufende Achse schwenkbeweglich ist und dass der erste Aufhängungspunkt (11) am Fahrgestell über eine Strebe (12) abgestützt ist, die senkrecht zu der Ebene (13) orientiert ist.

2. Landwirtschaftliches Arbeitsfahrzeug nach Anspruch 1, **dadurch gekennzeichnet, dass** der Abstand zwischen dem Schwerpunkt (16) der Kabine (7) und der Ebene (13) kleiner als ein Viertel der Höhe der Fahrerkabine (7) ist.

3. Landwirtschaftliches Arbeitsfahrzeug nach Anspruch 1 oder 2, **dadurch gekennzeichnet, dass** die Ebene (13) durch einen Sitz (14) des Fahrers (15) in der Fahrerkabine (7) verläuft.

4. Landwirtschaftliches Arbeitsfahrzeug nach einem der vorhergehenden Ansprüche, **dadurch gekennzeichnet, dass** wenigstens ein erster (11) der Aufhängungspunkte (10, 11) an einer Rückwand der Fahrerkabine (7) angeordnet ist.

5. Landwirtschaftliches Arbeitsfahrzeug nach Anspruch 4, **dadurch gekennzeichnet, dass** der wenigstens eine erste Aufhängungspunkt (11) auf einer Quermittenebene der Fahrerkabine (7) oder darüber angeordnet ist.

6. Landwirtschaftliches Arbeitsfahrzeug nach Anspruch 5, **dadurch gekennzeichnet, dass** der erste Aufhängungspunkt an einer oberen hinteren Kante der Fahrerkabine (7) angeordnet ist.

7. Landwirtschaftliches Arbeitsfahrzeug nach einem der Ansprüche 4 bis 6, **dadurch gekennzeichnet, dass** wenigstens ein zweiter (10) der Aufhängungspunkte (10, 11) an einer unteren vorderen Kante der Fahrerkabine (7) angeordnet ist.

8. Landwirtschaftliches Arbeitsfahrzeug nach einem der vorhergehenden Ansprüche, **dadurch gekennzeichnet, dass** die Zahl der Aufhängungspunkte (10, 11) drei oder vier beträgt.

9. Landwirtschaftliches Arbeitsfahrzeug nach einem der vorhergehenden Ansprüche, **dadurch gekennzeichnet, dass** die Aufhängungspunkte (10, 11) bezüglich einer Längsmittelebene der Fahrerkabine symmetrisch angeordnet sind.

10. Landwirtschaftliches Arbeitsfahrzeug nach einem der vorhergehenden Ansprüche, **dadurch gekennzeichnet, dass** wenigstens einer der Aufhängungspunkte (10, 11) durch einen elastischen Formkörper (20) gebildet ist, der zwischen zwei quer zur Wirkrichtung einer die Fahrerkabine (7) an dem Aufhängungspunkt unterstützenden Kraft orientierten fahrgestellfesten Anschlagflächen (27, 28) gehalten ist und eine Schulter (21) aufweist, auf der die Fahrerkabine (7) ruht.

11. Landwirtschaftliches Arbeitsfahrzeug nach Anspruch 10, **dadurch gekennzeichnet, dass** der Formkörper (20) in Hohe der Schulter (21) einen Hohlraum (22) aufweist.

12. Landwirtschaftliches Arbeitsfahrzeug nach Anspruch 10 oder 11, **dadurch gekennzeichnet, dass** die Anschlagflächen (27, 28) durch einen sich durch den Formkörper (20) erstreckenden Stift (24) fest verbunden sind.

## Claims

1. An agricultural working vehicle comprising a chassis and a driver's cab (7) connected to the chassis at at least three suspension points (10, 11), wherein the suspension points (10, 11) define a plane (13) intersecting the interior of the driver's cab (7), **characterised in that** the driver's cab (7) is pivotally movable about an axis extending through the second suspension point (10) and the first suspension point (11) is supported on the chassis by way of a strut (12) oriented perpendicularly to the plane (13).

2. An agricultural working vehicle according to claim 1 **characterised in that** the distance between the centre of gravity (16) of the cab (7) and the plane (13) is less than a quarter of the height of the driver's cab (7).

3. An agricultural working vehicle according to claim 1 or claim 2 **characterised in that** the plane (13) passes through a seat (14) for the driver (15) in the driver's cab (7).

4. An agricultural working vehicle according to one of the preceding claims **characterised in that** at least a first one (11) of the suspension points (10, 11) is arranged at a rear wall of the driver's cab (7).

5. An agricultural working vehicle according to claim 4 **characterised in that** the at least one first suspension point (11) is arranged on a transverse central plane of the driver's cab (7) or thereabove.

6. An agricultural working vehicle according to claim 5 **characterised in that** the first suspension point is arranged at an upper rear edge of the driver's cab (7).

7. An agricultural working vehicle according to one of claims 4 to 6 **characterised in that** at least a second one (10) of the suspension points (10, 11) is arranged at a lower front edge of the driver's cab (7).

8. An agricultural working vehicle according to one of the preceding claims **characterised in that** the number of suspension points (10, 11) is three or four.

9. An agricultural working vehicle according to one of the preceding claims **characterised in that** the suspension points (10, 11) are arranged symmetrically with respect to a longitudinal central plane of the driver's cab.

10. An agricultural working vehicle according to one of the preceding claims **characterised in that** at least one of the suspension points (10, 11) is formed by an elastic shaped body (20) which is held between two abutment surfaces (27, 28) which are fixed with respect to the chassis and are oriented transversely to the operative direction of a force supporting the driver's cab (7) at the suspension point, and has a shoulder (21) on which the driver's cab (7) rests.

11. An agricultural working vehicle according to claim 10 **characterised in that** the shaped body (20) has a cavity (22) at the height of the shoulder (21).

12. An agricultural working vehicle according to claim 10 or claim 11 **characterised in that** the abutment surfaces (27, 28) are fixedly connected by a pin (24) extending through the shaped body (20).

## Revendications

1. Véhicule de travail agricole doté d'un châssis et d'une cabine de conduite (7) reliée au châssis par au moins trois points de suspension (10, 11), les points de suspension (10, 11) définissant un plan (13) qui coupe l'intérieur de la cabine de conduite (7), **caractérisé en ce que** la cabine de conduite (7) est mobile en pivotement autour d'un axe passant par le deuxième point de suspension (10), et **en ce que** le premier point de suspension (11) prend appui sur le châssis par l'intermédiaire d'une jambe de force (12) orientée perpendiculairement au plan (13).

2. Véhicule de travail agricole selon la revendication 1, **caractérisé en ce que** la distance entre le centre de gravité (16) de la cabine (7) et le plan (13) est inférieure à un quart de la hauteur de la cabine de conduite (7).

3. Véhicule de travail agricole selon la revendication 1 ou 2, **caractérisé en ce que** le plan (13) passe par un siège (14) du conducteur (15) dans la cabine de conduite (7).

4. Véhicule de travail agricole selon une des revendications précédentes, **caractérisé en ce qu'**au moins un premier (11) des points de suspension (10, 11) est disposé sur une paroi arrière de la cabine de conduite (7).

5. Véhicule de travail agricole selon la revendication 4, **caractérisé en ce que** ledit au moins un premier point de suspension (11) est disposé dans un plan médian transversal de la cabine de conduite (7) ou au-dessus.

6. Véhicule de travail agricole selon la revendication 5, **caractérisé en ce que** le premier point de suspension est disposé sur un bord arrière supérieur de la cabine de conduite (7) .

7. Véhicule de travail agricole selon une des revendications 4 à 6, **caractérisé en ce qu'**au moins un deuxième (10) des points de suspension (10, 11) est disposé sur un bord avant inférieur de la cabine de conduite (7).

8. Véhicule de travail agricole selon une des revendications précédentes, **caractérisé en ce que** le nombre de points de suspension (10, 11) est de trois ou quatre.

9. Véhicule de travail agricole selon une des revendications précédentes, **caractérisé en ce que** les points de suspension (10, 11) sont disposés symétriquement par rapport à un plan médian longitudinal de la cabine de conduite.

10. Véhicule de travail agricole selon une des revendications précédentes, **caractérisé en ce qu'**au moins un des points de suspension (10, 11) est formé par un corps moulé élastique (20) qui est tenu entre deux surfaces de butée (27, 28), lesquelles sont solidaires du châssis et sont orientées transversalement à la direction d'action d'une force soutenant la cabine de conduite (7) au point de suspension, et qui présente un épaulement (21) sur lequel la cabine de conduite (7) repose.

11. Véhicule de travail agricole selon la revendication 10, **caractérisé en ce que** le corps moulé (20) est pourvu d'une cavité (22) à la hauteur de l'épaulement (21).

12. Véhicule de travail agricole selon la revendication 10 ou 11, **caractérisé en ce que** les surfaces de butée (27, 28) sont solidarisées entre elles par une broche (24) qui traverse le corps moulé (20).
